# EUROPÄISCHE PATENTSCHRIFT

(11) **EP 0 374 787 B1**
(45) Veröffentlichungstag und Bekanntmachung des Hinweises auf die Patenterteilung: **12.04.1995**
(21) Anmeldenummer: 89123362.9
(22) Anmeldetag: 18.12.1989
(51) Int. Cl.: H04Q 7/20, H04M 1/72, H04B 7/26

(54) **Funktelefonsystem in Form einer Nebenstellenanlage**
Radio telephone system in private branch exchange configuration
Systéme de radio-téléphonie sous forme d'un central privé

(30) Priorität: 23.12.1988 DE 3843565
(43) Veröffentlichungstag der Anmeldung: 27.06.1990
(73) Patentinhaber: Alcatel SEL Aktiengesellschaft, D-70435 Stuttgart (DE)
(72) Erfinder: Böhm, Manfred, Dr., D-7000 Stuttgart 31 (DE)
(74) Vertreter: Pohl, Herbert, Dipl.-Ing.

(56) Entgegenhaltungen:
- EP-A- 0 188 322
- EP-A- 0 225 607
- GB-A- 2 138 652

## Beschreibung

Die vorliegende Erfindung bezieht sich auf ein Funktelefonsystem, insbesondere in Form einer Nebenstellenanlage in einem oder mehreren und/oder außerhalb eines oder mehrerer Gebäude, nach dem Oberbegriff des Anspruchs 1.

Bei einem derartigen aus der EP-A-225 607 bekannten Funktelefonsystem sind die einzelnen Sende/Empfangseinheiten über Verbindungsleitungen mit der Zentraleinheit der Nebenstellenanlage verbunden, so daß zwar die einzelnen Teilnehmergeräte in mobiler Weise einsetzbar, jedoch jeweils an den vorbestimmten Bereich der Sende/Empfangseinheit gebunden sind. Ein weiterer Nachteil dieses bekannten Funktelefonsystems besteht darin, daß ein erheblicher Verkabelungsaufwand getrieben werden muß, um die einzelnen Sende/Empfangseinheiten mit der Zentraleinheit zu verbinden. Dieser Aufwand entspricht nahezu demjenigen, wie er bisher für übliche Nebenstellenanlagen, die mit fest verdrahteten Teilnehmergeräten bestückt sind, aufgewendet werden muß.

Aus Br Telecom Technol J Vol 4 No 4 October 1986 "Controlled Radio Coverage in Buildings", D.A. Palmer et al. ist ein Funktelefonsystem bekannt, bei dem die Sende/Empfangseinheiten bspw. stockwerksweise in einem Gebäude vorgesehen sind und die Verbindung von diesen Sende/Empfangseinheiten zu den einzelnen Teilnehmergeräten über Schlitzhohlleiter erfolgt. Hierbei gelten im Grunde genommen ähnliche Nachteile, wie sie zum vorgenannten Funktelefonsystem erwähnt worden sind, da eine ortsfeste Teilverdrahtung erfolgt.

Aufgabe der vorliegenden Erfindung ist es, ein Funktelefonsystem der eingangs genannten Art zu schaffen, mit dem nicht nur ein mobiles Telefonieren innerhalb und/oder außerhalb bestimmter Gebäude möglich ist, sondern das in einfacher Weise auch nachträglich installierbar und an die gegebenenfalls sich jeweils ändernden Erfordernisse anpaßbar ist.

Zur Lösung dieser Aufgabe sind bei einem Funktelefonsystem der genannten Art die im Anspruch 1 angebenen Merkmale vorgesehen.

In erfindungsgemäßer Weise ist also die Festverdrahtung der einzelnen Sende/Empfangseinheiten mit der Zentraleinheit bspw. einer Nebenstellenanlage durch einen Funkbus ersetzt, was in vorteilhafter Weise zur Folge hat, daß teuere Leitungsinstallationen entfallen und daß jegliche Änderungen am bzw. im Gebäude zu einer überaus schnellen und billigen Änderung des Telefonsystems führt. Außerdem ist es möglich, in einfacher Weise das Funktelefonsystem an die jeweiligen Bedürfnisse anzupassen, also bspw. im Hinblick auf Veranstaltungen, an denen den einzelnen Teilnehmern schnurlose Telefone als Teilnehmergeräte an die Hand gegeben werden können. Dabei können auch Änderungen in der Größe der zur Verfügung stehenden Räumlichkeiten berücksichtigt werden.

Zur weiteren Vereinfachung insbesondere hinsichtlich der Gerätetechnik sind gemäß einem Ausführungsbeispiel vorliegender Erfindung die Merkmale des Anspruchs 2 vorgesehen.

Dabei ist es zweckmäßig, gemäß Anspruch 3 die Einheiten bzw. Geräte im Zeitmultiplexbetrieb einzurichten.

Eine einfache und günstige Lösung ergibt sich, wenn die Funkbuselemente gemäß den Merkmalen des Anspruchs 4 und das mobile Teilnehmergerät gemäß den Merkmalen des Anspruchs 5 ausgebildet sind.

Eine noch höhere Mobilität ergibt sich dann, wenn, wie es bei einem weiteren Ausführungsbeispiel vorliegender Erfindung verwirklicht ist, die Merkmale des Anspruchs 6 vorgesehen sind. Dabei kann es zweckmäßig sein, die Funkbuselemente mit üblichen Netzsteckern zu versehen und üblicherweise vorhandene Steckdosen der elektrischen Gebäudeinstallation zu verwenden. Eine noch einfachere und günstigere Möglichkeit ergibt sich dann, wenn die Merkmale des Anspruchs 7 vorgesehen sind, da gleichzeitig mit der elektrischen Verbindung eine mechanische Halterung des Funkbuselements einhergeht.

Gemäß den Merkmalen des Anspruchs 8 kann es zweckmäßig sein, übliche Nebenstellenanlagen einzusetzen, oder wenn bereits eine Nebenstellenanlage mit fest verdrahteten Teilnehmergeräten vorhanden ist, diese in entsprechender Weise für das erfindungsgemäße Funktelefonsystem umzubauen bzw. zu erweitern.

Mit den Merkmalen des Anspruchs 9 ist eine optimale Funkverbindungsqualität erreicht.

Weitere Einzelheiten der Erfindung sind der folgenden Beschreibung zu entnehmen, in der die Erfindung anhand des in der Zeichnung dargestellten Ausführungsbeispieles näher beschrieben ist. Es zeigen:
- Figur 1: im Blockschaltbild ein Funktelefonsystem gemäß einem bevorzugten Ausführungsbeispiel vorliegender Erfindung,
- Figur 2: im Blockschaltbild ein Amtskanalgerät, wie es bei dem Funktelefonsystem nach Fig. 1 verwendet wird,
- Figur 3: im Blockschaltbild die Zentraleinheit einer Nebenstellenanlage für das Funktelefonsystem nach Fig. 1,
- Figur 4: im Blockschaltbild ein Teilnehmergerät, wie es bei dem Funktelefonsystem nach Fig. 1 verwendet wird,
- Figur 5: im Blockschaltbild ein Funkbuselement des Funkbus für das Funktelefonsystem nach Fig. 1,
- Figur 6: ein vereinfachtes Diagramm des Signalformates in Abhängigkeit von der Zeit bei den einzelnen Funkbuselementen des Funktelefonsystems nach Fig. 1 und
- Figur 7: ein vereinfachtes Diagramm des Signalformates in Abhängigkeit von der Zeit für ein beim Funktelefonsystem nach Fig. 1 verwendeten mobilen Teilnehmergerät.

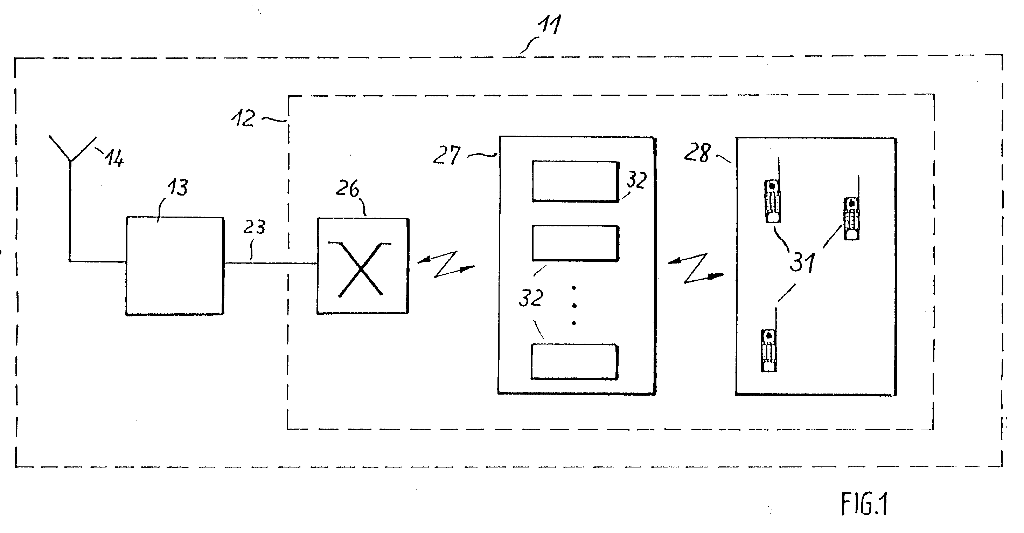

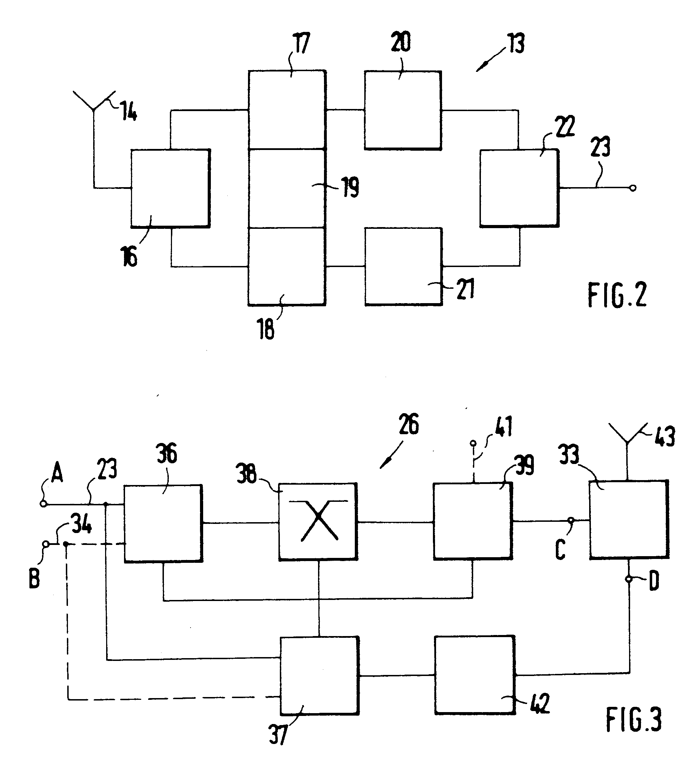

Das in der Figur 1 gemäß einem bevorzugten Ausführungsbeispiel vorliegender Erfindung dargestellte Funktelefonsystem 11 ist in Form einer Nebenstellenanlage 12 mit einem Amtskanalgerät 13 verbunden, das über eine Antenne 14 in bekannter Weise Funksignale, die über das öffentliche Funknetz übertragen werden, empfangen und aussenden kann. Dieses öffentliche Mobilkommunikationsnetz ist bspw. das in Deutschland gebräuchliche C-Netz mit 450 MHz oder in Zukunft das sog. D-Netz mit 900 MHz. Das Amtskanalgerät 13, das 1 bis n Funkkanäle in jeweils einem bestimmten Trägerfrequenzbereich empfangen kann, besitzt gemäß Figur 2 in bekannter Weise einen Duplexer 16. eine Sender/Modulator-Einheit 17 und eine Empfänger/Demodulator-Einheit 18, die mit dem Duplexer 16 verbunden sind, eine Frequenzaufbereitungsvorrichtung 19, eine Signalaufbereitungsvorrichtung 20 und eine Signalauswertevorichtung 21, von denen die erste mit der Sender/Modulator-Einheit 17 und die andere mit der Empfänger/Demodulator-Einheit 18 verbunden ist und die beide an dem anderen Ende mit einem Kanalumsetzer 22 verbunden sind, der mit der Nebenstellenanlage 12 des erfindungsgemäßen Funktelefonsystems 11 verbunden ist, wobei 1 bis n PCM-Amtskanäle auf der Verbindungsleitung 23 geführt werden können.

Das hier als Nebenstellenanlage 12 dargestellte und ausgebildete Funktelefonsystem 11 besitzt eine Zentraleinheit 26, die über eine als Funkbus 27 bezeichnete Funkverbindungskette innerhalb und/oder außerhalb eines oder mehrerer Gebäude mit der dort vorhandenen Teilnehmeranordnung 28 verbunden bzw. im Dialogbetrieb verbindbar ist.

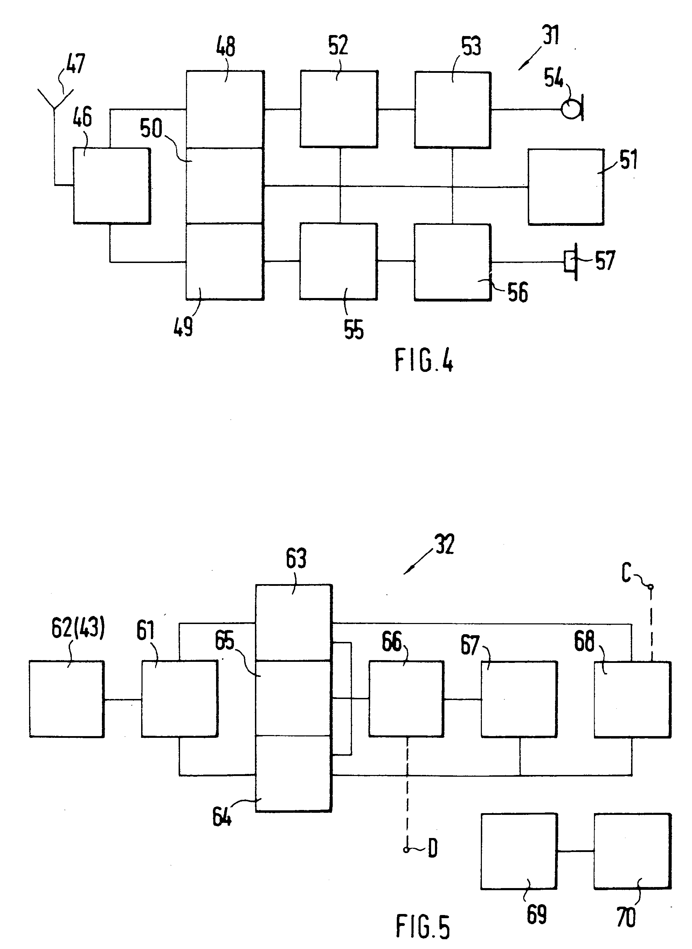

Die Teilnehmeranordnung 28 besteht aus einer Vielzahl von Teilnehmergeräten 31; wie sie aus Fig. 4 hervorgehen und die als an sich bereits bekannte schnurlose Telefongeräte ausgebildet sind. Diese Teilnehmergeräte 31 sind somit mobil und innerhalb des Funktelefonsystems 11 an verschiedenen Orten vorhanden. Der Funkbus 27 besteht aus einer Vielzahl von im wesentlichen identisch aufgebauten Funkbuselementen 32, wie sie anhand der Fig. 5 in ihrem Aufbau dargestellt sind. Die Funkbuselemente 32 sind innerhalb des Funktelefonsystems bzw. innerhalb und/oder außerhalb des einen oder der mehreren Gebäude derart verteilt angeordnet, daß im wesentlichen eine quasi-optische (Sicht-)Verbindung zwischen jeweils benachbarten Funkbuselementen 32 besteht. Es ist jedoch abhängig von der z.B. materialmäßigen Ausgestaltung von Wänden und dgl. häufig nicht unbedingt notwendig, daß eine direkte Sichtverbindung zwischen den einzelnen Funkbuselementen 32 bestehen muß. Für den Sende/Empfangsbetrieb ist es dabei notwendig, daß das betreffende Teilnehmergerät 31 jeweils im Sende- bzw. Empfangsbereich eines Funkbuselementes 32 liegt, das den Funkdialogbetrieb mit einem benachbarten Funkbuselement 32 und dieses wieder mit einem benachbarten Funkbuselement 32 usw. aufnimmt.

Figur 3 zeigt die Zentraleinheit 26 der Nebenstellenanlage 12 des Funktelefonsystems 11, wobei hierbei gleichzeitig berücksichtigt ist, daß die Nebenstellenanlage 12 nicht nur am Punkt A mit dem Amtskanalgerät 13 für eine Funkverbindung nach außen, also über das öffentliche Mobilkommunikationsnetz sondern, wie gestrichelt angedeutet ist auch mit einem nicht dargestellten Amtsleitungsgerät am Punkt B verbunden sein kann, so daß ankommende und abgehende Gespräche auch über das Amtsleitungsnetz übertragen werden können. Die Zentraleinheit 26 besitzt eine erste Anpassungsschaltung 36 und eine Nebenstellensteuerung 37, die sowohl mit der vom Amtskanalgerät (Punkt A) kommenden Verbindungsleitung 23 als auch mit einer vom Amtsleitungsgerät (Punkt B) kommenden Verbindungsleitung 34 verbunden sind. Die erste Anpassungsschaltung 36 ist unmittelbar und parallel dazu über ein Koppelfeld 38 mit einer zweiten Anpassungsschaltung 39 verbunden, die über Nebenstellenleitungen 41 mit nicht dargestellten fest verdrahteten Nebenstellentelefonen verbunden sein kann. Die Nebenstellensteuerung 37, die ebenfalls mit dem Koppelfeld 38 verbunden ist, ist mit einer Funkbussteuerung 42 verbunden. Ein Funkbuskopf 33, der in ähnlicher Weise wie ein Funkbuselement 32 ausgebildet ist, ist sowohl mit der zweiten Anpassungsschaltung 39 (an einem Punkt c) als auch mit der Funkbussteuerung 42 (an einem Punkt D) verbunden und besitzt eine Antenne 43.

Gemäß Figur 4 besitzt das schnurlose Teilnehmergerät 31 in bekannter Weise einen Duplexer 46, der an einem Ende mit einer Sende/Empfangsantenne 47 verbunden ist und am anderen Ende sowohl mit einer Sender/Modulator-Einheit 48 als auch mit einer Empfänger/Demodulator-Einheit 49 verbunden ist, zwischen denen eine Frequenzaufbereitungsvorrichtung 50 vorgesehen ist, die mit einem Bedienprozessor 51 verbunden ist. Die Sender/Modulator-Einheit 48 ist über eine Signalaufbereitungsvorrichtung 52 und einem damit verbundenen Sprachkodierer 53 mit einem Mikrofonteil 54 verbunden. In entsprechender Weise ist die Empfänger/Demodulator-Einheit 49 über eine Signalauswertevorrichtung 55 und einem damit verbundenen Sprachdekodierer 56 mit einer Hörmuschel 57 verbunden.

Jedes Funkbuselement 32 besitzt gemäß Figur 5 einen Duplexer 61, der einerseits mit einer Antenne 62 und andererseits sowohl mit einer Sender/Modulator-Einheit 63 als auch mit einer Empfänger/Demodulator-Einheit 64 verbunden ist, zwischen denen eine Frequenzaufbereitungsvorrichtung 65 vorgesehen ist, die über einen Steuerprozessor 66 mit einem Dienstkanal-Demodulator 67 verbunden ist.
Sender/Modulator-Einheit 63 und Empfänger/Demodulator-Einheit 64 sind einerseits unmittelbar und andererseits über einen Umsetzer 68 miteinander verbunden. Außerdem ist die Empfänger/Demodulator-Einheit 64 mit dem Dienstkanal-Demodulator 67 verbunden.

Als Funkbuselement 32 innerhalb des Funkbus 27 zwischen der Teilnehmeranordnung 28 und der Zentraleinheit 26 ist jedes Funkbuselement 32 mit einer Stromversorgungseinheit 69 versehen, die einen üblichen nicht dargestellten Schraubsockel besitzt, mit dessen Hilfe das Funkbuselement 32 mit Lampenfassungen 70 der üblichen elektrischen Gebäudeinstallation elektrisch verbunden werden kann. Auf diese Weise kann das Funkbuselement 32 in jede beliebige Fassung 70 einer vorhandenen oder anzubringenden Leuchte eingesetzt werden, so daß auf diese Weise nicht nur eine elektrische Verbindung sondern auch eine mechanische Halterung des Funkbuselementes 32 gegeben ist.

Der Funkbuskopf 33, wie er im Zusammenhang mit der Zentraleinheit 26 beschrieben ist, ist entsprechend dem Funkbuselement 32 gemäß Figur 5 aufgebaut, wobei lediglich die der Stromversorgungseinheit 69 nicht mit einer Fassung 70 verbindbar sondern mit der Stromversorgung der Zentraleinheit 26 fest verdrahtet. Zusätzlich jedoch ist, wie der Figur 3 zu entnehmen ist, am Verknüpfungspunkt D der Steuerprozessor 66 (Figur 5) mit der Funkbussteuerung 42 (Figur 3) und am Verknüpfungspunkt C der Stelle (b) der Umsetzer 68 (Figur 5) mit der zweiten Anpassungsschaltung 39 (Figur 3) verbunden.

Eine Dialogverbindung zwischen einem Teilnehmer von außerhalb und einem mobilen Funkteilnehmer innerhalb des Funktelefonsystems geht in folgender Weise vor sich: Das von außerhalb ankommende Signal gelangt in die Zentraleinheit 26 der Nebenstellenanlage 12 bzw. des Funktelefonsystems 11 über das Amtskanalgerät 13 oder Amtsleitungsgerät und wird vom in der Zentraleinheit 26 fest verdrahteten Funkbuskopf 33 zum nächstliegenden Funkbuselement 32, von dort zum wiederum nächstliegenden Funkbuselement 32 usw. durch Funkverbindung übertragen, solange, bis dasjenige Funkbuselement 32 erreicht ist, in dessen Sende/Empfangsbereich das angewählte Teilnehmergerät 31 sich befindet. Die Signalverbindung vom betreffenden Teilnehmergerät 31 zu einem Teilnehmer nach außerhalb erfolgt in entsprechend umgekehrter Weise, also zunächst zwischen Teilnehmergerät 31 und nächstliegenden Funkbuselement 32, von dort zum nächstliegenden Funkbuselement 32 usw. bis zur Zentraleinheit 26 und von dort nach außerhalb.

In entsprechender Weise erfolgt eine Dialogverbindung zwischen zwei Teilnehmergeräten 31 innerhalb des Funktelefonsystems 11 stets über die betreffenden Funkbuselemente 32 und die dazwischen liegende Zentraleinheit 26.

Ist das Funktelefonsystem 11 innerhalb und außerhalb eines einzigen Gebäudes vorgesehen, so kann es im allgemeinen ausreichen, einen mit der Zentraleinheit 26 fest verdrahteten Funkbuskopf 33 vorzusehen. Sind dagegen mehrere Gebäude angeschlossen oder die Teilnehmergerätestation außerhalb zu weit entfernt, so kann es zweckmäßig sein, in dem oder den betreffenden anderen Gebäuden oder an einem Ort außerhalb jeweils einen weiteren Funkbuskopf 33 als Ausgang für die Funkverbindungskette in Form des Funkbus 27 vorzusehen und diesen mit der Zentraleinheit 26 über eine Verbindungsleitung fest zu verbinden.

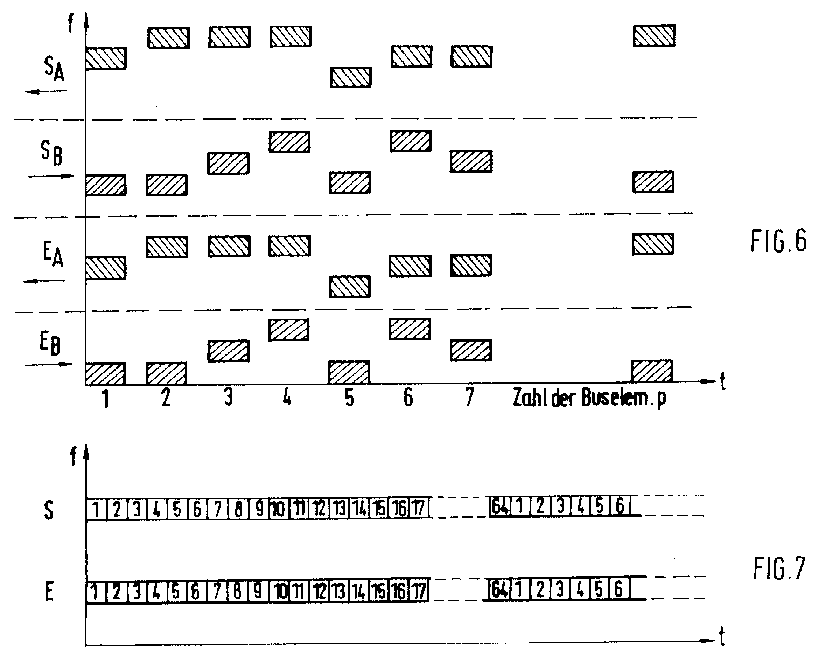

Die Figuren 6 und 7 zeigen bspw. das Signalformat für das Funkbuselement 32 bzw. das Teilnehmergerät 31, das als TDMA-Telefon, also im Zeitmultiplex arbeitendes Telefon ausgebildet ist. Jedes Funkbuselement 32 kann gemäß Fig. 6 drei verschiedene Frequenzgruppenpaare verarbeiten, von denen ein Frequenzgruppenpaar für den Sende- und Empfangsbetrieb mit einem oder mehreren Teilnehmergeräten 31 dient und die beiden anderen Frequenzgruppenpaare für den Sende- und Empfangsbetrieb mit den in zwei Richtungen auseinanderliegenden benachbarten Funkbuselementen 32 dienen.

Figur 7 zeigt bspw. von einem TDMA-Gerät 31, das ein einziges Frequenzpaar besitzt, daß der Sende- und der Empfangsfrequenzbereich mit 64 Kanälen versehen ist. Es ist in nicht dargestellter Weise auch möglich, die identischen Teilnehmergeräte 31 mit mehr als einer Trägerfrequenz auszustatten. Entsprechendes gilt für die Funkbuselemente 32. In diesen Fällen ist es zweckmäßig, die Einstellung der Funkbuselemente 32 und der Teilnehmergeräte 31 bzgl. Frequenz aber auch bzgl. Kanal und Sendeleistung über einen Dienstkanal von der Zentraleinheit 26 aus vorzunehmen.

## Patentansprüche

1. Funktelefonsystem (11), insbesondere in Form einer Nebenstellenanlage in einem oder mehreren und/oder außerhalb eines oder mehrerer Gebäude, mit mehreren mobilen Teilnehmergeräten (31), mit mehreren Sende-/Empfangseinheiten, die mit den mobilen Teilnehmergeräten (31) durch Funkverbindung koppelbar sind, und mit einer Zentraleinheit (26), die mit den Sende-/Empfangseinheiten zusammenwirkt, **dadurch gekennzeichnet**, daß die Sende-/Empfangseinheiten als Funkbuselemente (32) ausgebildet und derart angeordnet sind, daß sie nicht nur eine Funkverbindung zu mindestens einem der mobilen Teilnehmergeräte (31), sondern auch über jeweils benachbarte Funkbuselemente (32) eine Funkverbindungskette (Funkbus) (27) zu der Zentraleinheit (26) bilden, deren Sende-/Empfangseinheit als Funkbuskopf (33) ausgebildet ist.

2. Funktelefonsystem (11) nach Anspruch 1, dadurch gekennzeichnet, daß die Funkbuselemente (32) untereinander einheitlich ausgebildet und hinsichtlich Trägerfrequenz und/oder Kanalzahl und/oder Sendeleistung von der Zentraleinheit (26) ansteuerbar sind.

3. Funktelefonsystem (11) nach Anspruch 1 oder 2, dadurch gekennzeichnet, daß das Funkbuselement (32) und das mobile Teilnehmergerät (31) im TDMA arbeiten.

4. Funktelefonsystem (11) nach Anspruch 3, dadurch gekennzeichnet, daß das Funkbuselement (32) mit drei Trägerfrequenzpaaren arbeitet, von denen ein erstes Paar dem Duplexdialog mit dem betreffenden mobilen Teilnehmergerät (31) dient und die beiden anderen Paare dem Duplexdialog mit zwei benachbarten Funkbuselementen (32) dienen.

5. Funktelefonsystem (11) nach Anspruch 3, dadurch gekennzeichnet, daß das mobile Teilnehmergerät (31) mit einem einzigen Trägerfrequenzpaar arbeitet.

6. Funktelefonsystem (11) nach mindestens einem der vorhergehenden Ansprüche, dadurch gekennzeichnet, daß das Funkbuselement (32) mit einer Stromversorgungsvorrichtung (69) zum Anschließen an ein Element der elektrischen Gebäudeinstallation versehen ist.

7. Funktelefonsystem (11) nach Anspruch 6, dadurch gekennzeichnet, daß die Stromversorgungsvorrichtung (69) mit einem Sockel für eine übliche Lampenfassung (70) versehen ist.

8. Funktelefonsystem (11) nach mindestens einem der vorhergehenden Ansprüche, dadurch gekennzeichnet, daß bei ihrer Anwendung in einer Nebenstellenanlage (12), die mit einer oder mehreren Amtsleitungs- und/oder Amtskanaleinrichtungen verbunden ist, die Zentraleinheit (26) der Nebenstellenanlage (12) mit einer mit einem Funkbuskopf (33) verbundenen Steuervorrichtung (42) für den Funkbus (27) versehen ist.

9. Funktelefonsystem (11) nach mindestens einem der vorhergehenden Ansprüche, dadurch gekennzeichnet, daß die Funkbuselemente (32) des Funkbusses (27) in einer quasi-optischen Verbindungsanordung eingesetzt sind.

## Claims

1. A radiotelephone system (11), particularly in the form of a private branch exchange inside and/or outside one or more buildings, comprising a plurality of mobile subscriber units (31), a plurality of transmitter/receiver units (32) which can be coupled with the mobile subscriber units (31) by radio links, and a central unit (26) cooperating with the transmitter/receiver units (32), **characterized in** that the transmitter/receiver units are designed as radio-bus elements (32) and arranged to form not only a radio link to at least one of the mobile subscriber units (31) but also, via respective adjacent radio-bus elements (32), a radio-link chain (radio bus) (27) to the central unit (26), whose transmitter/receiver unit is designed as a radio-bus head (33).

2. A radiotelephone system (11) as claimed in claim 1, characterized in that the radio-bus elements (32) are of uniform design and are controllable from the central unit (26) with respect to carrier frequency and/or channel number and/or transmitting power.

3. A radiotelephone system (11) as claimed in claim 1 or 2, characterized in that the radio-bus element (32) and the mobile subscriber unit (31) operate in a TDMA mode.

4. A radiotelephone system (11) as claimed in claim 3, characterized in that the radio-bus element (32) operates with three carrier-frequency pairs, a first of which is used for duplex communication with the respective mobile subscriber unit (31), while the two others are used for duplex communication with two adjacent radio-bus elements (32).

5. A radiotelephone system (11) as claimed in claim 3, characterized in that the mobile subscriber unit (31) operates with a single carrier-frequency pair.

6. A radiotelephone system (11) as claimed in at least one of the preceding claims, characterized in that the radio-bus element (32) is provided with a power supply (69) for connection to an element of the electric building wiring system.

7. A radiotelephone system (11) as claimed in claim 6, characterized in that the power supply (69) is provided with a base for a conventional lamp socket (70).

8. A radiotelephone system (11) as claimed in at least one of the preceding claims, characterized in that, if used in a private branch exchange (12) connected to one or more central-office-trunk and/or central-office-channel equipments, the central unit (26) of the private branch exchange (12) is provided with a controller (42) for the radio bus (27), said controller (42) being connected to a radio-bus head (33).

9. A radiotelephone system (11) as claimed in at least one of the preceding claims, characterized in that the radio-bus elements (32) of the radio bus (27) are used in a quasi-optical link arrangement.

## Revendications

1. Système de radio-téléphonie (11), en particulier sous la forme d'un central privé, dans un ou plusieurs et/ou à l'extérieur d'un ou plusieurs bâtiment(s), comportant plusieurs postes d'abonné (31) mobiles, comportant plusieurs unités d'émission/réception pouvant être couplées avec les postes d'abonné (31) mobiles par liaison radio, et comportant une unité centrale (26) qui agit conjointement avec les unités d'émission/réception, caractérisé en ce que les unités d'émission/réception sont réalisées sous la forme d'éléments de bus de radiocommunication (32) et sont agencées de telle sorte qu'elles forment non seulement une liaison radio à au moins l'un des postes d'abonné (31) mobiles, mais qu'elles forment également une chaîne de liaison radio (bus de radiocommunication) (27), par l'intermédiaire d'éléments de bus de radiocommunication (32) respectivement voisins, à l'unité centrale (26), dont l'unité d'émission/réception est réalisée sous la forme d'une tête de bus de radiocommunication (33).

2. Système de radio-téléphonie (11) suivant la revendication 1, caractérisé en ce que les éléments de bus de radiocommunication (32) sont réalisés de façon uniforme entre eux et peuvent être commandés par l'unité centrale (26), en ce qui concerne la fréquence porteuse et/ou le nombre de canaux et/ou la puissance émise.

3. Système de radio-téléphonie (11) suivant la revendication 1 ou 2, caractérisé en ce que l'élément de bus de radiocommunication (32) et le poste d'abonné (31) travaillent en AMRT.

4. Système de radio-téléphonie (11) suivant la revendication 3, caractérisé en ce que l'élément de bus de radiocommunication (32) fonctionne avec trois paires de fréquences porteuses, dont une première paire sert au dialogue en duplex avec le poste d'abonné (31) mobile correspondant et les deux autres paires servent au dialogue en duplex avec deux éléments de bus de radiocommunication (32) voisins.

5. Système de radio-téléphonie (11) suivant la revendication 3, caractérisé en ce que le poste d'abonné (31) mobile fonctionne avec une seule paire de fréquences porteuses.

6. Système de radio-téléphonie (11) suivant l'une au moins des revendications précédentes, caractérisé en ce que l'élément de bus de radiocommunication (32) est muni d'un dispositif d'alimentation en courant (69) permettant la connexion à un élément de l'installation électrique du bâtiment.

7. Système de radio-téléphonie (11) suivant la revendication 6, caractérisé en ce que le dispositif d'alimentation en courant (69) est muni d'un socle pour une douille de lampe (70) habituelle.

8. Système de radio-téléphonie (11) suivant l'une au moins des revendications précédentes, caractérisé en ce que, lors de son utilisation dans un central privé (12) relié à un ou plusieurs équipements de ligne réseau et/ou de voie réseau, l'unité centrale (26) du central privé (12) est munie d'un dispositif de commande (42) relié à la tête de bus de radiocommunication (33) pour le bus de radiocommunication (27).

9. Système de radio-téléphonie (11) suivant l'une au moins des revendications précédentes, caractérisé en ce que les éléments de bus de radiocommunication (32) du bus de radiocommunication (27) sont placés suivant une disposition de liaisons quasi-optique.
